## Europäisches Patentamt

## European Patent Office

## Office européen des brevets

(11) Veröffentlichungsnummer: **0 253 322**
**B1**

(12) # EUROPÄISCHE PATENTSCHRIFT

(45) Veröffentlichungstag der Patentschrift:
20.06.90

(51) Int. Cl.⁵: **F16K 47/04**, F16K 47/02

(21) Anmeldenummer: **87109973.5**

(22) Anmeldetag: **10.07.87**

(54) **Geräuscharmes Hydraulik-Ventil.**

(30) Priorität: **12.07.86 DE 3623868**

(43) Veröffentlichungstag der Anmeldung:
**20.01.88 Patentblatt 88/3**

(45) Bekanntmachung des Hinweises auf die Patenterteilung:
**20.06.90 Patentblatt 90/25**

(84) Benannte Vertragsstaaten:
**DE FR GB IT NL SE**

(56) Entgegenhaltungen:
**DE-A- 2 154 684
DE-A- 2 246 529
DE-A- 2 448 295
DE-A- 2 509 376
DE-A- 2 728 648
DE-A- 2 731 809
DE-A- 3 027 809
DE-B- 2 435 561
US-A- 2 821 999
US-A- 3 529 628**

(73) Patentinhaber: **HOWALDTSWERKE-DEUTSCHE WERFT AG, Werftstrasse 112-114 Postfach 14 63 09,
D-2300 Kiel 14(DE)**

(72) Erfinder: **Prösch, Helmuth, Am Wiesenhof 4,
D-2300 Kiel 1(DE)**

(74) Vertreter: **Kaiser, Henning et al, SALZGITTER AG
Patente und Lizenzen
Kurfürstendamm 32 Postfach 15 06 27,
D-1000 Berlin 15(DE)**

ACTORUM AG

## Beschreibung

Die Erfindung bezieht sich auf ein geräuscharmes Hydraulik-Ventil, das als Steuer- und Regelventil für flüssige Medien verwendbar ist.

Die Erfindung geht von allgemein bekannten Steuerventilen aus, bei denen ein Kolben oder Schieber in einer zylindrischen Bohrung eines Gehäuses verschiebbar ist und hierbei die Verbindung eines in dem Gehäuse angeordneten Zulaufraumes mit einem Ablaufraum herstellt oder unterbricht. In einem solchen Gehäuse können mehrere Zu- und Ablaufräume vorgesehen sein. Es können bei einer Bewegung des Kolbens gleichzeitig mehrere Verbindungen hergestellt werden. Auch kann es möglich sein, beispielsweise einen Zulaufraum wechselweise mit zwei Ablaufräumen zu verbinden. Bei diesen Ventilen wird häufig ein hohlzylindrischer Kolben verwendet, dessen Wand Durchbrechungen aufweist, die radiale Verbindungsabschnitte zwischen einem Zu- oder Ablaufraum und dem einen axialen Verbindungsabschnitt bildenden Innenraum des Kolbens darstellen. Bei derartigen Ventilen kann häufig eine große Geräuschemission beobachtet werden. Diese rührt von Turbulenzen und Strömungskavitationen, insbesondere bei großen Strömungsgeschwindigkeiten an Querschnittsverengungen und Änderung der Strömungsrichtung her.

Es ist bekannt, daß kritische Druckdifferenzen und Strömungsgeschwindigkeiten durch Hintereinander- oder Parallelschaltung mehrerer Widerstände abgebaut werden können, beispielsweise durch die Anwendung von Drosselkanälen oder Drosselstrecken.

In DE-A 12 728 648 sind Drosselventile beschrieben, bei denen ein Ventilteller auf einem Sitzring abdichtet. An dem Ventilteller befindet sich ein Stapel von Platten, die mit keilförmigen Ausschnitten und Löchern versehen und mit sich änderndem Winkel angeordnet sind, wodurch spiralförmige oder sich windende, drosselnde Strömungswege entstehen. Der Widerstand des im wesentlichen axial durchflossenen Plattenstapels wird geringer, wenn der Stapel aus dem ihn umgebenden zylindrischen Gehäuse beim Öffnen des Ventils herausgezogen wird, wobei in den zwischen Ventilteller und Sitzring freiwerdenden Stapel das Medium radial ein- oder ausströmen kann. Bei vollständig geöffnetem Ventil findet keine Drosselung mehr statt, so daß auch die Strömungsgeräusche nicht mehr beeinflußt werden. Diese Ventil-Bauart ist außerdem nicht für Steuerschieber geeignet, mit denen gleichzeitig mehrere Ströme gesteuert werden.

Weitere Ventile, bei denen eine Strömung unter mehrfacher Umlenkung, Drosselung und Verwirbelung von einem zentralen Kanal durch eine Vielzahl enger Räume in einem Stapel von Platten oder Lamellen geleitet wird, sind bekannt aus US-A 2 821 999, US-A 3 529 628, DE-A 12 448 295 und DE-A 12509 376. Derartige Ventile sind bei der Anwendung in der Hydraulik für eine turbulente Strömung ausgelegt, da diese die Geräuschentstehung und die Kavitation vermindern kann, weniger Widerstand ergibt und die Erwärmung sowie die Viskositätsänderung geringer bleiben. Bei Steuerventilen werden außerdem Drosselstrecken als nachteilig angesehen, da sie die Leistung vermindern.

In DE-B 22 435 561 ist ein Dampf-Regelventil beschrieben, bei dem durch das geöffnete Ventil in einen Lochzylinder einströmender Dampf mehrfach radial und axial umgelenkt und hierbei entspannt wird und dabei einen unterkritische Geschwindigkeit erhält. Ein anderer Teil des Dampfes tritt axial durch ein Lochblech aus. Durch die Kombination soll eine Dämpfung von bei der Entspannung auftretenden Schwingungen erreicht werden. Eine derartige Anordnung ist jedoch für Hydraulik-Ventile ungeeignet.

Aus DE-A 13 027 809 sind Ventilanordnungen bekannt, bei denen u.a. zur Verringerung des Strömungsgeräusches an den Zugängen zu einem ringförmigen Kanal auf einem Kolben oder in diesem Kanal selbst poröse Hülsen verwendet werden, die Verbindungsabschnitte aus einer Vielzahl von Verbindungsräumen mit kleinem Querschnitt bilden. Eine derartige Maßnahme ist jedoch für Steuerventile mit hydraulischen Medien wegen der Erhöhung des Strömungswiderstandes und der Gefahr von Verstopfungen der Poren ungeeignet.

Aus DE-A 12 246 529 und DE-A 12 731 809 sind Mischbatterien bekannt, bei denen am Ein- oder Auslauf zu dem Ventilkolben Schlitze oder ähnliche Durchlässe vorgesehen sind, in denen der Strom zur Verminderung der Strömungsgeräusche aufgeteilt wird. Die hier beschriebenen Maßnahmen sind jedoch für Steuerventile, bei denen kurzzeitig hohe Durchflußmengen von bis über 100 l/min auftreten können, unzureichend. Eine Übertragung dieser Maßnahmen auf Regel- und Steuerventile ist wegen anderer Strömungsbedingungen nicht ohne weiteres möglich und würde noch nicht zu einer erwünschten Körperschallreduzierung führen.

DE-A 12 154 684 zeigt ein Hydraulik-Ventil mit mehreren auf einer gemeinsamen Kolbenstange angeordneten Kolben, durch die radiale Verbindungsabschnitte zu Zu- und Abflußräumen im Ventilgehäuse geöffnet oder verschlossen werden. In den radialen Verbindungsräumen ist eine Drosselmatrix in Form einer Anzahl von Platten oder Scheiben angeordnet, zwischen denen sich Schlitze mit radial nach außen zunehmendem Strömungsquerschnitt befinden. Die Platten sind mit Umlenkstegen für die Strömung versehen, die jedoch nur eine minimale Verwirbelung erzeugen. Durch diese Ausbildung der Schlitze soll das Arbeitsgeräusch des Ventils herabgesetzt werden. Da die Schlitze im Gehäuse vorgesehen sind, ist hier eine weitere Aufteilung der Strömung auf ihrem axialen Weg nicht möglich, so daß in axialer Strömungsrichtung keine Geräuschminderung erfolgt oder wenigstens ein großer Durchmesser der Ventilanordnung notwendig ist.

Es ist die Aufgabe der vorliegenden Erfindung, ein als Steuer- oder Regelventil verwendbares Hydraulik-Ventil zu schaffen, bei dem die für die Geräuschbildung kritischen Stellen in den Verbindungsräumen innerhalb des Kolbens oder Schiebers so ausgebildet sind, daß eine gegenüber bekannten Ventilen weitere Reduzierung der Geräu-

sche der Strömung erreicht wird, wobei die äußeren Maße des Ventils durch diese Maßnahmen nicht wesentlich vergrößert werden sollen und die Leistung nicht beeinträchtigt werden darf.

Das Hydraulik-Ventil soll als Steuerventil für Schiffsruderanlagen und ähnliche hydraulische Einrichtungen einsetzbar sein, wobei kurzzeitig Ölmengen von über 100 dm³/min mit Drücken von bis zu 300 bar auftreten.

Zur Lösung dieser Aufgabe ist gemäß Anspruch 1 vorgesehen, daß alle Verbindungsabschnitte in dem Kolben in eine Vielzahl von Verbindungsräumen aufgeteilt sind, die laminare Strömungsverhältnisse ergeben. Die Verbindungsräume sind als Bohrungen, Kanäle oder Schlitze ausgebildet. Jeder einzelne Verbindungsraum hat einen verhältnismäßig kleinen Querschnitt. In der Summe ergeben diese kleinen Querschnitte jedoch etwa den Ventilnennweitenquerschnitt, um eine zu stark drosselnde Wirkung zu vermeiden.

Die radialen Verbindungsabschnitte werden vorzugsweise durch Schlitze gebildet, die vom äußeren Umfang des Kolbens bis zu wenigstens einem in Kolben angeordneten, in axialer Richtung verlaufenden Kanal reichen. Dieser Kanal kann ein hohler, nicht weiter unterteilter Innenraum des Kolbens sein. In der bevorzugten Ausführung wird der axiale Verbindungsabschnitt in dem Kolben jedoch aus einer Vielzahl von außermittig angeordneten kleineren Kanälen gebildet, die mit den schlitzförmigen radialen Verbindungsabschnitten verbunden sind. In diesem Falle weist der Kolben einen Kern auf, um den herum Bohrungen angeordnet sind, wobei die radialen Schlitze bis etwa an den Teilkreis dieser Bohrungen reichen. Es können auch axiale Bohrungen auf mehreren Teilkreisen von unterschiedlichem Teilkreis-Radius angeordnet sein. In diesem Falle reichen die radialen Schlitze bis an den Teilkreis der inneren Bohrungen.

Während die axialen Kanäle von den Stirnseiten aus in den Kolben gebohrt werden und durch eingesetzte Verschlußstopfen abgeschlossen oder unterteilt werden, lassen sich die radialen Schlitze durch Sägeschnitte und vorzugsweise durch eingedrehte Einschnitte etwa nach Art einer um den Umfang eines Kolbens laufenden tiefen Nute herstellen. Aus dieser Art der Herstellung und der verwendbaren Werkzeuge ergibt sich, daß die Schlitze eine gewisse Mindestbreite nicht unterschreiten können.

In einer bevorzugten Ausführungsform ist daher vorgesehen, daß die radialen Verbindungsabschnitte durch auf einen Kern des Kolbens aufgesetzte Scheiben gebildet werden, wobei die Breite des Schlitzes zwischen den Scheiben durch ggf. sehr schmale Abstandsringe bestimmt wird. In diesem Falle weisen auch die Scheiben kreisförmige Löcher oder anders geformte Durchbrüche auf, die eine Verlängerung der axialen Kanäle bilden, welche hier in eine auf den Kern des Kolbens geschobene Führungsbuchse gebohrt sind. Durch diese Anordnung der Löcher in den Scheiben werden unnötige Umlenkungen der Strömung und örtliche Turbulenzen an scharfen Kanten vermieden und damit die drosselnde Wirkung eingeschränkt. Auf diese Weise entsteht ein Schieber oder Kolben, der aus einer Vielzahl zusammengefügter Teile besteht und der äußerst schmale Verbindungsräume besitzen kann, in dem jedoch die Strömung im wesentlichen laminar fließt.

Die Ausbildung der radialen Verbindungsräume als in einer Ebene umlaufende Schlitze kann bei Steuerbewegungen des Kolbens zu einem digitalen Verhalten führen, da sich die Widerstände stufenweise verändern. Ein annähernd analoges Regelverhalten kann dadurch erreicht werden, daß der Außendurchmesser des Kolbens bzw. der Scheiben im Bereich der Schlitze geringfügig verringert ist, so daß bei einer Stellung des Kolbens, bei dem nur ein Teil der Schlitze mit einem Zu- oder Abflußraum in Verbindung steht, schon eine geringe Menge der hydraulischen Flüssigkeit neben den engen Ringkanal durch die Schlitze strömen kann, die sich nicht in Deckung mit dem Zu- oder Ablaufraum befinden.

Sind in einem Verbindungsabschnitt die Breiten der Schlitze gleich, so wird ein etwa geradliniges Regelverhalten des Hydraulik-Ventiles erreicht. Durch unterschiedliche Schlitzbreiten wird die Regelcharakteristik beeinflußt, was für gewisse Fälle von Vorteil sein kann. Es ist selbstverständlich auch möglich, innerhalb eines Hydraulik-Ventils mit mehreren Verbindungsmöglichkeiten die Schlitzbreiten verschieden zu wählen, um die Möglichkeiten zur Steuerung oder Regelung unterschiedlicher Verbauchergrößen wie z.B. in Differenzialzylindern den jeweiligen Verhältnissen anzupassen.

Vereinfacht dargestellte, bevorzugte Ausführungsbeispiele sind auf den beigefügten Zeichnungen schematisch wiedergegeben.

Es zeigen

Fig. 1 ein Hydraulik-Ventil mit außermittig gebohrten axialen Verbindungsabschnitten und eingeschnittenen radialen Verbindungsabschnitten,

Fig. 2 einen Schnitt durch einen Kolben gemäß Fig. 1, wobei der Schnitt II - II in der Ebene eines Schlitzes verläuft,

Fig. 3 einen Schnitt ähnlich Fig. 2, jedoch durch einen Kolben mit in zwei Teilkreisen angeordneten axialen Verbindungskanälen,

Fig. 4 einen vergrößerten Ausschnitt aus dem Hydraulik-Ventil gemäß Fig. 1,

Fig. 5 ein Hydraulik-Ventil mit einem aus verschiedenen Teilen zusammengesetzten Kolben,

Fig. 6 eine Scheibe des Kolbens gemäß Fig. 5,

Fig. 7 einen Abstandsring des Kolbens gemäß Fig. 5,

Fig. 8 einen vergrößerten Ausschnitt aus dem Kolben gemäß Fig. 5 und

Fig. 9 eine Scheibe für einen zusammengesetzten Kolben ähnlich Fig. 5, jedoch mit einer größeren Anzahl axialer Kanäle.

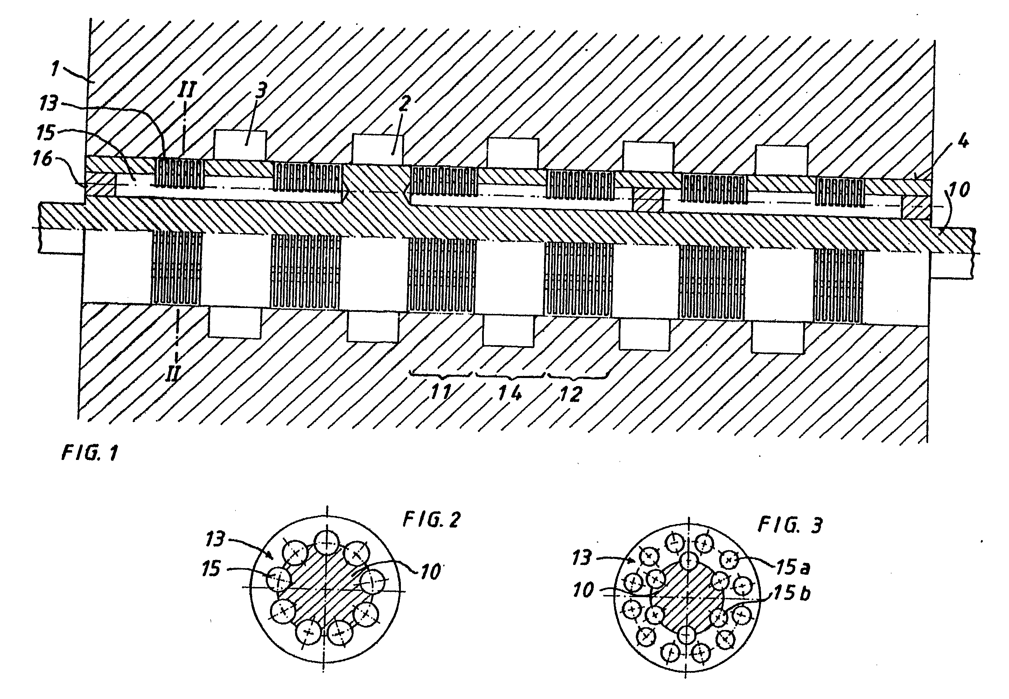

Das Hydraulik-Ventil nach den Fig. 1 bis 4 besteht aus einem Gehäuse 1, das eine Bohrung 4 enthält, an der Zulaufräume 2 und Ablaufräume 3 angeordnet sind, die bei Bedarf beliebig vertauscht werden können. In der zylindrischen Bohrung 4 ist der Kolben 10 axial beweglich. Der Kolben weist mehrere Verbindungsabschnitte 11, 12 auf, in denen die Verbindungsräume durch eine Vielzahl von umlaufenden Schlitzen 13 gebildet sind.

Zwischen je zwei radialen Verbindungsabschnitten befindet sich ein axialer Verbindungsabschnitt 14, der durch eine Mehrzahl axialer Bohrungen oder Kanäle 15 geformt ist. Die einzelnen Kanäle 15 werden durch Abschlußstopfen 16 verschlossen oder getrennt.

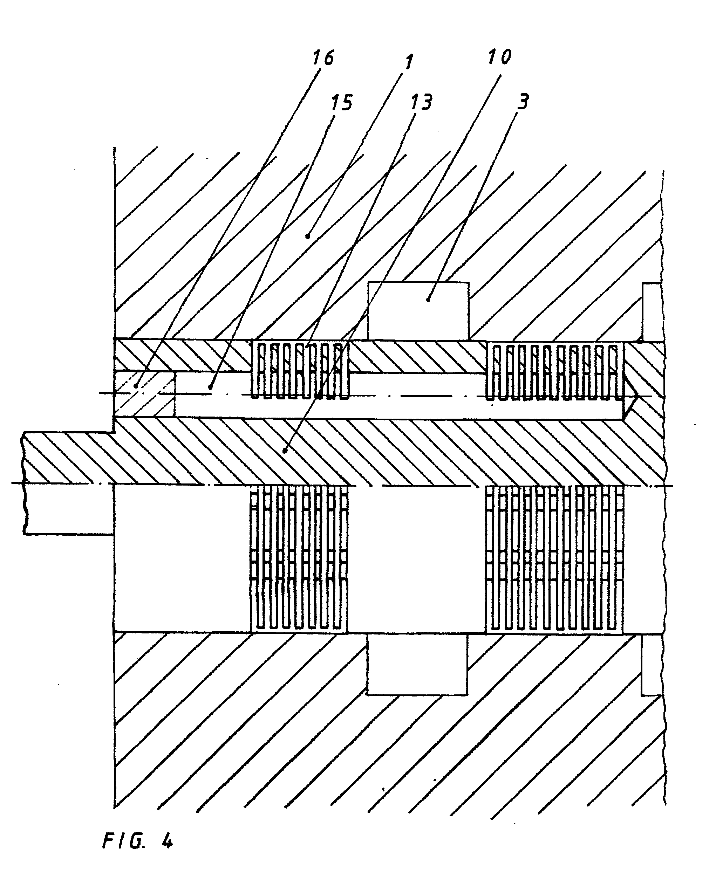

Fig. 3 zeigt eine Ausführung, bei der axiale Kanäle 15 a, 15 b auf zwei Teilkreisen mit verschiedenem Radius durch die radialen und axialen Verbindungsabschnitte 11, 12, 14 verlaufen, wodurch eine größere Anzahl engerer Kanäle 15 als nach Fig. 2 ermöglicht wird.

Die in dem Gehäuse 1 zu und von den Räumen 2, 3 verlaufenden Kanäle und Anschlußleitungen sind ebenso wie die Einrichtungen zur Bewegung des Kolbens nicht dargestellt.

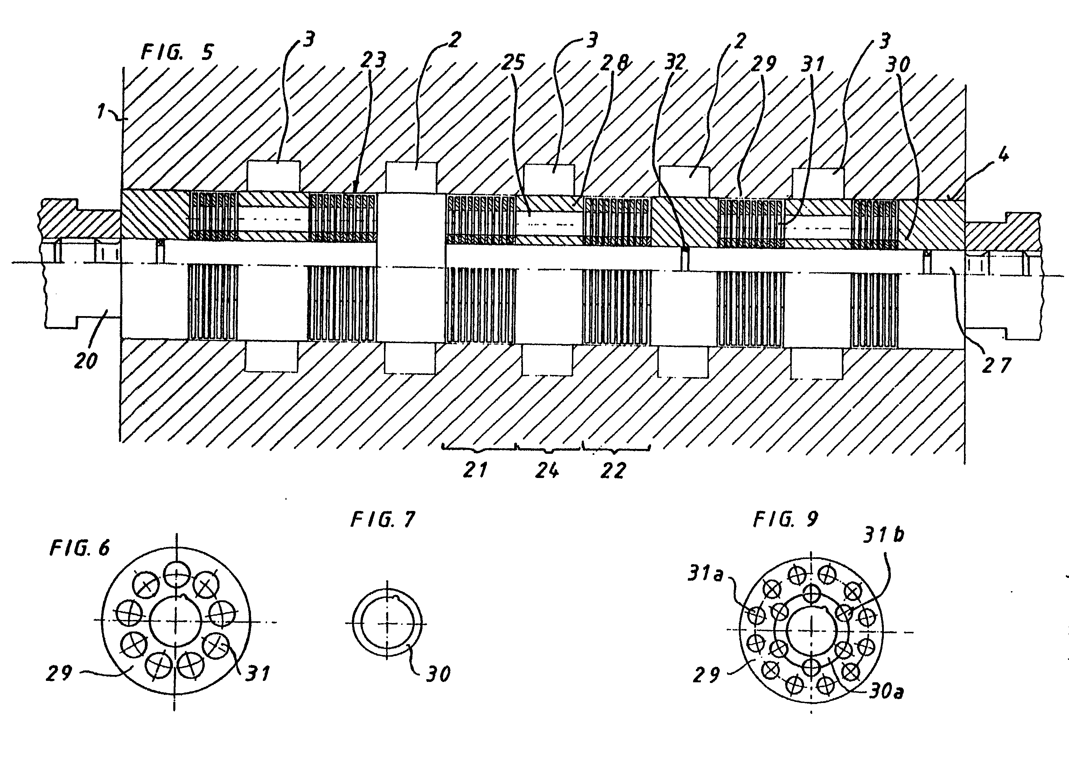

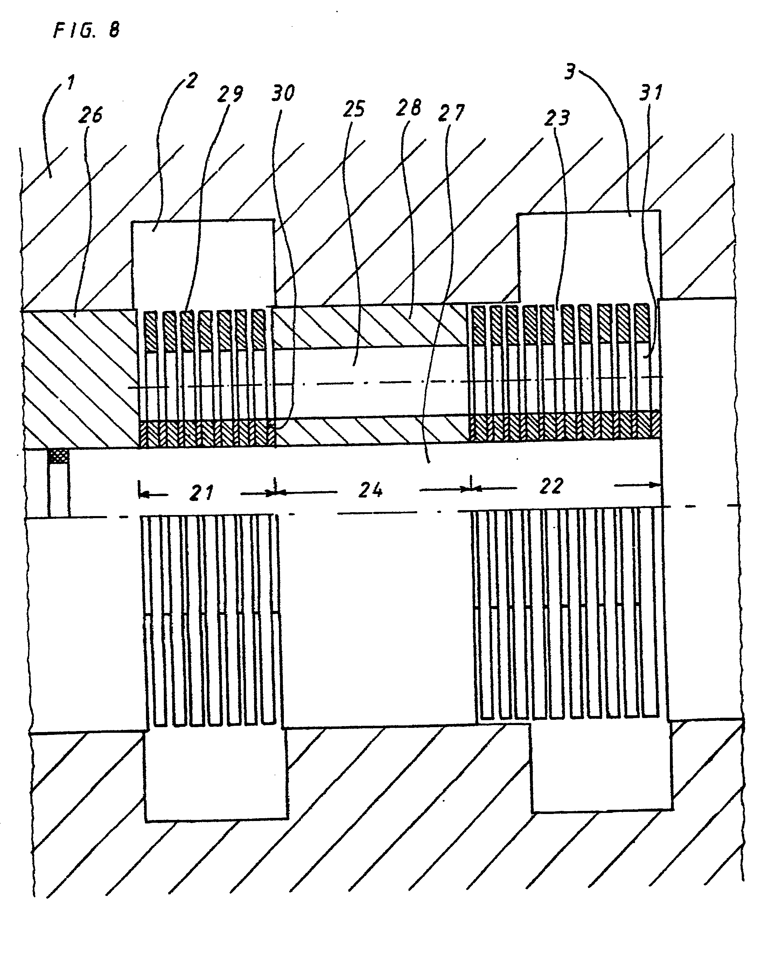

In Fig. 5 und 8 ist ein Kolben gezeigt, der aus einer Vielzahl von Einzelteilen zusammengesetzt ist. Der Kolben 20 weist einen Kern 27 auf. Auf diesen sind im Bereich der radialen Verbindungsabschnitte 21, 22 Scheiben 29 (Fig. 6) und Abstandsringe 30 (Fig. 7) aufgesetzt. Die axialen Verbindungsabschnitte 24 werden durch Führungsbuchsen 28 auf dem Kern 27 gebildet. Die Führungsbuchsen 28 enthalten eine Vielzahl von Kanälen oder Bohrungen 25. Auf dem Kern 27 sind außerdem Abschlußringe 26 angeordnet, die die einzelnen Bereiche mit zusammengehörenden Verbindungsabschnitten voneinader trennen.

An den Abschlußringen 26 sind Dichtungsringe 32 auf dem Kern 27 angeordnet. Alle auf den Kern geschobenen Teile sind gegen Verdrehen gesichert. Vorzugsweise fluchten die Löcher 31 in den Scheiben 29 mit den Bohrungen 25 in den Führungsbuchsen 28.

In Fig. 9 ist eine Scheibe 29 dargestellt, bei der Löcher 31 a, 31 b auf zwei Teilkreisen von unterschiedlichem Radius liegen. Auf diese Weise können die Querschnitte der Löcher 31 a, 31 b sowie der Kanäle 25 bei größerer Anzahl kleiner sein als vergleichsweise gemäß Fig. 6. Bei der Scheibe gemäß Fig. 9 ist außerdem ein Abstandsring 30 a mit der Scheibe 29 fest verbunden und liegt innerhalb des inneren Teilkreises, so daß er teilweise auch die Löcher 31 b umgibt. Anstelle eines Abstandsringes 30 a kann auch die Scheibe 29 innerhalb des inneren Teilkreises mit einer größeren Dicke ausgeführt sein.

Eine zu dieser Ausführung gehörende Führungshülse 28, die nicht dargestellt ist, besitzt eine Anordnung von Kanälen 25, die der der Löcher 31a, 31 b entspricht.

Zur Vermeidung einer digitalen Regelcharakteristik sind bei den dargestellten Ausführungsbeispielen die Außendurchmesser des Kolbens 10 bzw. der Scheibe 29 im Bereich der radialen Verbindungsabschnitte etwas geringer als der Durchmesser der Bohrung 4, bzw. der Führungshülse 28 und der Abschlußringe 26. Hierdurch kann bereits bei teilweiser Verschiebung des Kolbens beispielsweise aus einem Zulaufraum 2 zwischen der Innenwand der Bohrung und der wirksamen Außenfläche eines radialen Verbindungsabschnittes Flüssigkeit in geringerem Maße auch in die Schlitze 13, 23 eindringen, die noch nicht direkt an dem Zulaufraum 2 liegen.

Ein Regelventil gemäß Fig. 5, für Nennweite 18, z.B. das als elektrisch gesteuertes Proportionalventil für eine Rudersteuerung auf Schiffen und Booten eingesetzt werden kann, weist beispielsweise einen Durchmesser der Bohrung 4 von 35 mm auf. Die Scheiben 29 sind 1 mm dick oder dünner. Der die Schlitze 23 ergebende Abstand zwischen den Scheiben 29 beträgt 0,8 mm, wobei ggf. kleinere Abstände bis zu 0,05 mm möglich sind. Es werden Scheiben gemäß Fig. 9 verwendet. Die Summe der durchflossenen Querschnitte in den radialen und axialen Verbindungsabschnitten ist etwa gleich dem Querschnitt der Nennweite 18. Geringere Gesamtquerschnitte würden die Leistung durch Drosselung zu stark vermindern, während größere möglich sind.

In herkömmlichen Steuerventilen ist die Reynoldsche Zahl groß und die Strömung turbulent, so daß ein Strömungsgeräusch entsteht. Durch die Aufteilung der Verbindungsabschnitte in eine Vielzahl enger oder schmaler Verbindungsräume wird eine niedrige Reynoldsche Zahl und damit eine im wesentlichen laminare Strömung erreicht, die geräuschlos oder wenigstens im Vergleich zu herkömmlichen Ventilen geräuscharm ist. Die optimalen Abmessungen der Verbindungsräume sind je nach den Anwendungsbedingungen zu ermitteln.

Erfindungsgemäße Ventile werden mit einer älteren, nicht vorbeschriebenen Ausführungsform bezüglich des entstehenden Körperschalls verglichen. Bei der älteren Ausführung waren die radialen Verbindungsabschnitte durch auf einen Teil des Umfangs des Kolbens angeordnete Bohrungen von wenigen Millimeter Durchmesser mit einem der Nennweite entsprechenden Gesamtquerschnitt und die axialen Verbindungsabschnitte durch jeweils nur eine zentrale Bohrung gebildet. Durch die Erfindung wurde bei einem Öldurchfluß von 60 dm³/min eine durchschnittliche Körperschallreduzierung von 14 dB, bei einem Öldurchfluß von 110 dm³/min von 11 dB erreicht. Eine weitere Verbesserung durch Optimierung der Schlitze und außermittigen Kanäle im Sinne dieser Erfindung scheint möglich zu sein.

**Patentansprüche**

1. Geräuscharmes Hydraulik-Ventil als Steuer- und Regelventil für flüssige Medien, bestehend aus einem Gehäuse (1) mit zylindrischer Bohrung sowie mit Zu- und Ablaufräumen (2, 3) an der Bohrung (4) und aus einem in der Bohrung (4) verschiebbaren Kolben (10, 20), der wenigstens zwei mit den Zu- und Ablaufräumen verbindbare radiale Verbindungsabschnitte und zwischen diesen einen axialen Verbindungsabschnitt aufweist, wobei die radialen Verbindungsabschnitte aus einer Vielzahl von schlitzförmigen, radialen Kanälen mit kleinem Strömungsquerschnitt bestehen, dadurch gekennzeichnet, daß die radialen Verbindungsabschnitte (11, 12; 21, 22) durch Schlitze (13, 23) gebildet sind, die um den Umfang des Kolbens (10, 20) herum verlaufen und mit dem axialen Verbindungsabschnitt (14, 24) verbunden sind, der aus einer Vielzahl von außermittig angeordneten Kanälen (15, 25) gebildet wird, die sowohl im Bereich der radialen Verbindungsabschnitte (11, 12; 21, 22) als auch in dem axialen Verbindungsabschnitt (14, 24) verlaufen.

2. Hydraulik-Ventil nach Anspruch 1, dadurch gekennzeichnet, daß die axiale Kanäle durch Bohrungen (15) und die umlaufenden Schlitze (13) durch Einschnitte in dem Kolben (10) gebildet sind.

3. Hydraulik-Ventil nach Anspruch 1, dadurch gekennzeichnet, daß die radialen Verbindungsabschnitte (21, 22) durch auf einen Kern (27) des Kolbens (20) abwechselnd aufgesetzte Scheiben (29) und Abstandringe (30), die die Schlitze (23) zwischen den Scheiben (29) ergeben, und der axiale Verbindungsabschnitt (24) durch Kanäle (25) in einer Führungsbuchse (28) auf dem Kern (27) des Kolbens (20) und durch den Kanälen (25) entsprechende Löcher (31) in den Scheiben (29) gebildet werden.

4. Hydraulik-Ventil nach einem oder mehreren der Ansprüche 1 bis 3, dadurch gekennzeichnet, daß der Außendurchmsesser des Kolbens (10, 20) im Bereich der Schlitze (13, 23) soweit verringert ist, daß bei einer Kolbenbewegung eine geringe Menge des Mediums auch in den Schlitzen (13, 23) strömen kann, die sich noch nicht oder nicht mehr mit einem Zu- oder Ablaufraum (2, 3) in Deckung befinden.

5. Hydraulik-Ventil nach einem oder mehreren der Ansprüche 1 bis 4, dadurch gekennzeichnet, daß in einem radialen Verbindungsabschnitt (11, 12; 21, 22) die Breite der Schlitze (13, 23) unterschiedlich ist.

6. Hydraulik-Ventil nach einem oder mehreren der Ansprüche 1 bis 5, dadurch gekennzeichnet, daß die Summe der durchflossenen Querschnitte in den radialen und axialen Verbindungsabschnitten (11, 12, 14; 21, 22, 24) etwa gleich dem Querschnitt der Nennweite des Ventils ist.

**Revendications**

1. Soupape hydraulique silencieuse servant de soupape de commande et de régulation pour fluides liquides, constituée d'un boîtier (1) comportant un alésage cylindrique ainsi que des chambres d'arrivée et de départ (2, 3) au niveau de l'alésage (4), et d'un piston (10, 20) pouvant coulisser dans l'alésage (4) et comportant au moins deux tronçons de liaison radiaux pouvant être reliés avec les chambres d'arrivée et de départ et un tronçon de liaison axial s'étendant entre ces tronçons, les tronçons de liaison radiaux étant constitués d'une pluralité de canaux radiaux en forme de fente ayant une petite section de passage, caractérisée en ce que les tronçons de liaison radiaux (11, 12; 21, 22) sont formés par des fentes (13, 23) s'étendant autour de la périphérie du piston (10, 20) et reliées avec le tronçon de liaison axial (14, 24) qui est formé d'un pluralité de canaux (14, 25) disposés de façon excentrée et s'étendant aussi bien dans la zone des tronçons de liaison radiaux (11, 12; 21, 22) que dans le tronçon de liaison axial (14, 24).

2. Soupape hydraulique selon la revendication 1, caractérisée en ce que les canaux axiaux sont formés par des alésages (15) dans le piston (10) et les fentes périphériques (13), par des entailles dans ce piston.

3. Soupape hydraulique selon la revendication 1, caractérisée en ce que les tronçons de liaison radiaux (21, 22) sont formés par des disques (29) et des bagues d'écartement (30) disposés alternativement sur un noyau (27) du piston (20), les bagues d'écartement formant les fentes (23) entre les disques (29), et en ce que le tronçon de liaison axial (24) est formé par des canaux (25) prévus dans une douille de guidage (28) montée sur le noyau (27) du piston (20) et par des trous (31) prévus dans les disques (29) et correspondant aux canaux (25).

4. Soupape hydraulique selon une ou plusieurs des revendications 1 à 3, caractérisée en ce que le diamètre extérieur du piston (10, 20) est suffisamment réduit dans la zone des fentes (13, 23), pour qu'un faible débit du fluide puisse également s'écouler, lors d'un mouvement du piston, dans les fentes (13, 23) qui ne se trouvent pas encore, ou qui ne se trouvent plus, en coincidence avec des chambres d'arrivée et de départ (2, 3).

5. Soupape hydraulique selon une ou plusieurs des revendications 1 à 4, caractérisée en ce que dans un tronçon de liaison radial (11, 12; 21, 22), la largeur des fentes (13, 23) est différente.

6. Soupape hydraulique selon une ou plusieurs des revendications 1 à 5, caractérisée en ce que la somme des sections de passage dans les tronçons de liaison radiaux et axial (11, 12, 14; 21, 22, 24) est à peu près égale à la section nominale de passage de la soupape.

**Claims**

1. Low-noise hydraulic valve utilised as a control and regulating valve for liquid media, including a housing (1), which is provided with a cylindrical bore and inlet and outlet chambers (2, 3) on the bore (4), and a piston (10, 20) which is displaceable in the bore (4) and has at least two radial connecting portions, which are connectable to the inlet and outlet chambers, and an axial connecting portion between said radial connecting portions, the radial connecting portions comprising a plurality of slot-like, radial ports having a small cross-section of flow, characterised in that the radial connecting portions (11, 12; 21, 22) are formed by slots (13, 23) which extend around the circumference of the piston (10, 20) and are connected to the axial connecting portion (14, 24), which is formed from a plurality of eccentrically disposed ports (15, 25), which extend both in the region of the radial connecting portions (11, 12; 21, 22) and in the axial connecting portion (14, 24).

2. Hydraulic valve according to claim 1, characterised in that the axial ports are formed by bores (15), and the circumferential slots (13) are formed by incisions in the piston (10).

3. Hydraulic valve according to claim 1, characterised in that the radial connecting portions (21, 22) are formed by discs (29), which are alternately mounted on a core (27) of the piston (20), and by spacer rings (30), which produce the slots (23) between the discs (29), and the axial connecting portion (24) is formed by ports (25) in a guide sleeve (28) on the core (27) of the piston (20) and by apertures (31) in the discs (29), which apertures correspond to the ports (25).

4. Hydraulic valve according to one or more of claims 1 to 3, characterised in that the external diameter of the piston (10, 20) in the region of the slots (13, 23) is reduced to such an extent that, during a movement of the piston, a small quantity of the medium can also flow in the slots (13, 23) which are not yet covered, or are no longer covered, by an inlet or outlet chamber (2, 3).

5. Hydraulic valve according to one or more of claims 1 to 4, characterised in that the width of the slots (13, 23) is variable in a radial connecting portion (11, 12; 21, 22).

6. Hydraulic valve according to one or more of claims 1 to 5, characterised in that the sum of the traversed cross-sections in the radial and axial connecting portions (11, 12, 14; 21, 22, 24) is roughly equal to the cross-section of the nominal width of the valve.

FIG. 1

FIG. 2

FIG. 3

EP 0 253 322 B1

FIG. 4

FIG. 5

1

3    23    2    25    28    32    2    29    31    3    30

4

20

27

21  24  22

EP 0 253 322 B1

FIG. 6

FIG. 7

FIG. 9

31a    31b

29        31

30

29        30a

FIG. 8